Europäisches Patentamt

European Patent Office

Office européen des brevets

(19)

(11) Veröffentlichungsnummer: **0 191 725**
**A2**

(12) **EUROPÄISCHE PATENTANMELDUNG**

(21) Anmeldenummer: 86810006.6

(22) Anmeldetag: 10.01.86

(51) Int. Cl.⁴: **B 01 D 53/34,** C 01 B 17/82

(30) Priorität: 16.01.85 CH 189/85
06.02.85 CH 525/85

(43) Veröffentlichungstag der Anmeldung: **20.08.86**
**Patentblatt 86/34**

(84) Benannte Vertragsstaaten: **AT BE CH DE FR GB IT LI LU
NL SE**

(71) Anmelder: CIBA-GEIGY AG, Klybeckstrasse 141,
CH-4002 Basel (CH)

(72) Erfinder: Fattinger, Volker, Dr., im Lee 39,
CH-4144 Arlesheim (CH)

(54) Verfahren zur Abscheidung von Schwefeldioxid aus Gasen und zur Gewinnung von konzentrierter Schwefelsäure.

(57) Verfahren zur Abscheidung von Schwefeldioxid aus Gasen, insbesondere Abgasen, und zur Herstellung von konzentrierter Schwefelsäure mit einer Konzentration von über 90% durch Einführen einer nach einem Stickoxid-Schwefelsäure-Prozess erhaltenen vorkonzentrierten Schwefelsäure in eine Schwefeltrioxid-Absorptionsanlage durch Benutzung der in der letzteren frei werdenden Wärmemenge zur Vorkonzentrierung der Schwefelsäure aus dem Stickoxid-Schwefelsäure-Prozess, wobei man den Schwefeldioxid enthaltenden Gasstrom, der zur Erzeugung von Schwefeltrioxid eingesetzt wird, vortrocknet und das aus dem Gas entfernte Wasser als wasserhaltige Schwefelsäure dem Stickoxid-Schwefelsäure-Prozess zuführt und/oder bei der Vorkonzentrierung entstehende wasserhaltige Gase in den Stickoxid-Schwefelsäure-Prozess einführt.

0191725

CIBA-GEIGY AG                                   71-15223/1+2/=

Basel (Schweiz)


Verfahren zur Abscheidung von Schwefeldioxid aus Gasen und zur

Gewinnung von konzentrierter Schwefelsäure

---

Gegenstand der vorliegenden Erfindung ist ein Verfahren zur Abscheidung von Schwefeldioxid aus Gasen, insbesondere Abgasen, und zur Gewinnung von konzentrierter Schwefelsäure unter Verwendung des abgeschiedenen Schwefeldioxids.

Zum Schutze der Umwelt ist man bestrebt, die Emissionen von Schwefeldioxid weitgehend zu reduzieren, indem man Schwefeldioxid aus Gasen, insbesondere Abgasen, abscheidet. Dabei ist es von Vorteil, das abgeschiedene Schwefeldioxid in eine verwertbare Form, vor allem in Schwefelsäure, umzuwandeln. Im Zuge dieser Bemühungen fällt mehr Schwefelsäure an, so dass es sinnvoll erscheint, wenn entsprechend weniger Schwefelsäure aus der Verbrennung von Schwefel produziert wird. Das dort anzuwendende Doppelkatalyseverfahren eignet sich für Schwefelverbrennungsgase und Röstgase, nicht jedoch für relativ schwache schwefeldioxidhaltige Gase und insbesondere Abgase, da es zu viel elektrische Energie verbraucht und somit zu teuer wird.

In Anbetracht der hohen Kosten einer wünschenswerten, möglichst vollständigen $SO_2$-Abscheidung aus Gasen von 6 bzw. 4 Vol.% $SO_2$ toleriert die in der Bundesrepublik Deutschland 1984 erschienene VDI-Richtlinie 2298 eine einhaltbare $SO_2$-Massenkonzentration im Abgas von 4,8 bzw. 3,1 $g/m^3$.

Das Stickoxid-Schwefelsäure-Verfahren erreicht bei geringerem Bedarf an elektrischer Energie wesentlich tiefere $SO_2$-Restgehalte (kleiner als 0,2 g/m$^3$). Aus Gründen des Umweltschutzes ist das Stickoxid-Schwefelsäure-Verfahren in den letzten Jahren weiterentwickelt worden. Die Entwicklung geht aus folgenden Literaturstellen hervor:

- Fattinger, V., Proc. Brit. Sulphur Corp., 3rd Int. Conf. Fert., London, November 1979, Paper XXVI

- Blankenstein, K., Neumann, G.E., Umweltbundesamt F und E Bericht No. 10403311, Juni 1980

- Sander, U., Fattinger, V., Chem.Ing.Tech., 55 (1983), Nr. 8, S. 601/607

- Fattinger, V., Ciba-Geigy Corporation, US Patent No. 4 148 868 (1979)

- Fattinger, V., Ciba-Geigy Corporation, US Patent No. 4 242 321 (1980)

- Ullmans Enzyklopädie der technischen Chemie, 4, neubearbeitete und erweiterte Auflage, Verlag Chemie, Weinheim, Band 21 (1982), S. 148.

Moderne Stickoxid-Schwefelsäure-Anlagen erreichen im gereinigten Abgas als Summe der sauren Schadgase $SO_2 + NO_x$ Werte unter 300 ppm. Diese tiefen Restgehalte an Schadstoffen können auch bei der Verarbeitung von schwachen $SO_2$-Gasen im Bereich 0,3 bis 5 Vol.% erzielt werden.

Neben sehr hohen Abscheidegraden für $SO_2$ haben $NO_x$-$H_2SO_4$-Verfahren weitere Vorteile gegenüber Kontaktanlagen:
- Geringerer Verbrauch an elektrischer Energie
- Hohe Betriebssicherheit
- Rasche Inbetriebsetzung ohne Vorheizung
- Leichte Reinigung des Systems durch Spülung mit Wasser.

Ein entscheidender Nachteil aller Stickoxid-Schwefelsäure-Systeme ist jedoch, dass eine direkte Produktion von nitrosefreier Säure mit mehr als 80 % $H_2SO_4$ mit tragbarem Aufwand nicht möglich ist.

Es ist bekannt, $SO_2$-Gase zuerst einer Kontaktanlage zuzuführen, in welcher ein Teil des $SO_2$ zu konzentrierter Schwefelsäure verarbeitet wird, und die noch $SO_2$-haltigen Gase einer nachgeschalteten Stickoxid-Schwefelsäure-Anlage zuzuleiten. Ein Nachteil dieser Verfahrensweise ist der Umstand, dass die Kontaktanlage für die gesamte $SO_2$-Gasmenge ausgelegt werden muss. Bei $SO_2$-Gasen unter 5 Vol.% ist es kaum möglich, die Wasserbilanz auszugleichen, weil die vorgeschaltete Kontaktanlage die gesamte im $SO_2$-Gas enthaltene Wassermenge absorbiert.

Es ist auch vorgeschlagen worden, die in einem Stickoxid-Schwefelsäure-System erzeugte 75 bis 78-%ige Schwefelsäure dadurch auf konzentrierte Säure zu verarbeiten, dass man durch Schwefelverbrennung ein starkes $SO_2$-Gas erzeugt und daraus $SO_3$ gewinnt, welches zur Aufkonzentrierung der Säure dient. Dabei kann - wie ebenfalls vorgeschlagen wurde - die Abwärme des Schwefelverbrennungsofens zur Vorkonzentrierung der Säure ausgenutzt werden. Der Nachteil dieser Arbeitsweise ist die Notwendigkeit der Beschaffung von Schwefel. Hinzu kommen die Kosten für die Verbrennungsapparaturen. Durch die Verbrennung des Schwefels vermehrt sich der Anfall an Schwefelsäure. Dies ist meist unerwünscht, wenn an sich bereits Schwierigkeit besteht, für die aus Gründen des Umweltschutzes anfallende Schwefelsäure eine Verwertung zu finden.

Gegenstand der Erfindung ist ein Verfahren zur Abscheidung von Schwefeldioxid aus Gasen und zur Herstellung von konzentrierter Schwefelsäure, wobei die Hauptmenge der Gase in einem Stickoxid-Schwefelsäuresystem von $SO_2$ befreit wird und die Aufkonzentrierung der Säure in einer Kontaktanlage erfolgt.

Das erfindungsgemässe Verfahren zur Abscheidung von Schwefeldioxid aus Gasen, insbesondere Abgasen, und zur Herstellung von konzentrierter Schwefelsäure mit einer Konzentration von mehr als 90 % durch Einführen einer nach einem Stickoxid-Schwefelsäure-Prozess erhaltenen vorkonzentrierten Schwefelsäure in eine Schwefeltrioxid-Absorptionsanlage ist dadurch gekennzeichnet, dass die im Schwefeltrioxid-Absorptionssystem frei werdende Wärmemenge zur Vorkonzentrierung der Schwefelsäure aus dem Stickoxid-Schwefelsäure-Prozess benutzt wird, wobei man

a) den Schwefeldioxid enthaltenden Gasstrom, der zur Erzeugung von Schwefeltrioxid eingesetzt wird, vortrocknet und das aus dem Gas entfernte Wasser als wasserhaltige Schwefelsäure dem Stickoxid-Schwefelsäure-Prozess zuführt und/oder

b) bei der Vorkonzentrierung entstehende wasserhaltige Gase in den Stickoxid-Schwefelsäure-Prozess einführt.

Der Grundgedanke des Verfahrens ist die Verwertung überschüssigen Wassers aus dem Kontaktsystem, einschliesslich dem Säurevorkonzentriersystem, in der Stickoxid-Schwefelsäure-Anlage. Es zeigt sich, dass man auf eine Vortrocknung der Schwefeldioxid-Gase verzichten kann, wenn man die wasserhaltigen Gase aus der Säurekonzentrierung im Stickoxid-Schwefelsäure-System verwertet. Im Normalfall werden jedoch beide Massnahmen, nämlich die Vortrocknung der Gase und die Rückführung der Austrittsgase der Schwefelsäurekonzentrierung in das Stickoxid-Schwefelsäure-System, angewendet.

Um die in einer Kontaktanlage gewinnbare Wärme zu vergrössern, ist es vorteilhaft, den Trockenturm der Kontaktanlage bei Temperaturen von über 70°C zu betreiben. Damit trotz der erhöhten Temperatur im Trockenturm eine vollständige Gastrocknung erzielt wird, empfiehlt es sich, die Schwefelsäure-Konzentration im Trockenturm-Kreislauf über 97 % $H_2SO_4$ zu halten.

Es ist nicht notwendig, bei der Erzeugung von $SO_3$ einen vollständigen Umsatz von $SO_2$ in $SO_3$ sicherzustellen. Es genügen z.B. Umsätze von unter 97 %, welche mit entsprechend einfachen und relativ billig erstellbaren Kontaktsystemen erzielbar sind, wenn die Gase, welche gelangen mit einer Temperatur von 80°C über Leitung 15 in eine
Kontaktkesselanlage einschliesslich Gaswärmetauschern zur Umsetzung
von $SO_2 \longrightarrow SO_3$. Der Umsatz liegt über 97 % und die $SO_3$-Gase gelangen
mit ca. 180°C über Leitung 16 in einen Venturi-Absorber, wonach sie
den Absorptionsturm 18 von unten nach oben durchströmen. Mittels der
Leitungen 19, 20 und 21 wird das von $SO_3$ befreite Gas bei einer
Temperatur von etwa 90°C in zwei Hälften geteilt und den Säurekonzentriertürmen 22 und 23 zugeleitet.

Ueber den Schwefelsäure-Nebelabscheider 24 und das Gebläse 25
gelangen die Abgase der Kontaktanlage schliesslich in den Kamin 5.

Durch die Säureleitung 26 wird eine 76-%ige Schwefelsäure aus dem
$NO_x$-$H_2SO_4$-System in den Säurekreislauf des zweiten Gasvortrockenturmes 12 geleitet. Der Säureüberlauf dieser zweiten Gasvortrocknung
gelangt mittels Leitung 27 in den ersten Gasvortrockenturm 10. Im
Säurekreislauf dieses Turmes befindet sich die Pumpe 28 und der
Säurekühler 29, welcher mittels Kühlwasser eine Temperatur des
Kreislaufes von weniger als 45°C sicherstellt.

Die Säure, welche die Hauptmenge des Wassergehaltes des Gasstromes
von 11 $Nm^3$/Sek. aufgenommen hat, gelangt in entsprechend verdünnter
Form über Leitung 30 zurück in das Stickoxid-Schwefelsäuresystem.

Die Menge an Säure von 76 % $H_2SO_4$, welche über Leitung 31 aus dem
Stickoxid-Schwefelsäuresystem abgeführt wird, ist mehr als viermal
grösser als die Säuremenge, welche mittels Leitung 26 abgezogen
wird. Die mittels Leitung 31 abgeleitete Säure von 76 % kehrt nicht
in das Stickoxid-Schwefelsäuresystem zurück; ihre Menge entspricht
stöchiometrisch der im Stickoxid-Schwefelsäuresystem verarbeiteten
$SO_2$-Menge. Im Wärmetauscher 32 wird die Säure auf eine Temperatur
von 100°C gebracht, bevor sie über die Leitung 33 in den Säurekonzentrierturm 23 gelangt. In diesem Turm wird die Säurekonzentration
auf ca. 81,5 % angehoben, unter Abgabe von Wasserdampf an das
trockene Eintrittsgas des Konzentrierturmes 23. Die Verdampfungswärme wird dem Konzentrierturm 23 mittels der Säurekreislaufleikann aus dem System ausgeschleust werden. Eine Säurevorkonzentrierung im Vakuum kann daher vorzugsweise dann zur Anwendung
kommen, wenn es mit anderen Mitteln schwierig ist, für das Gesamtsystem eine ausgeglichene Wasserbilanz sicherzustellen.

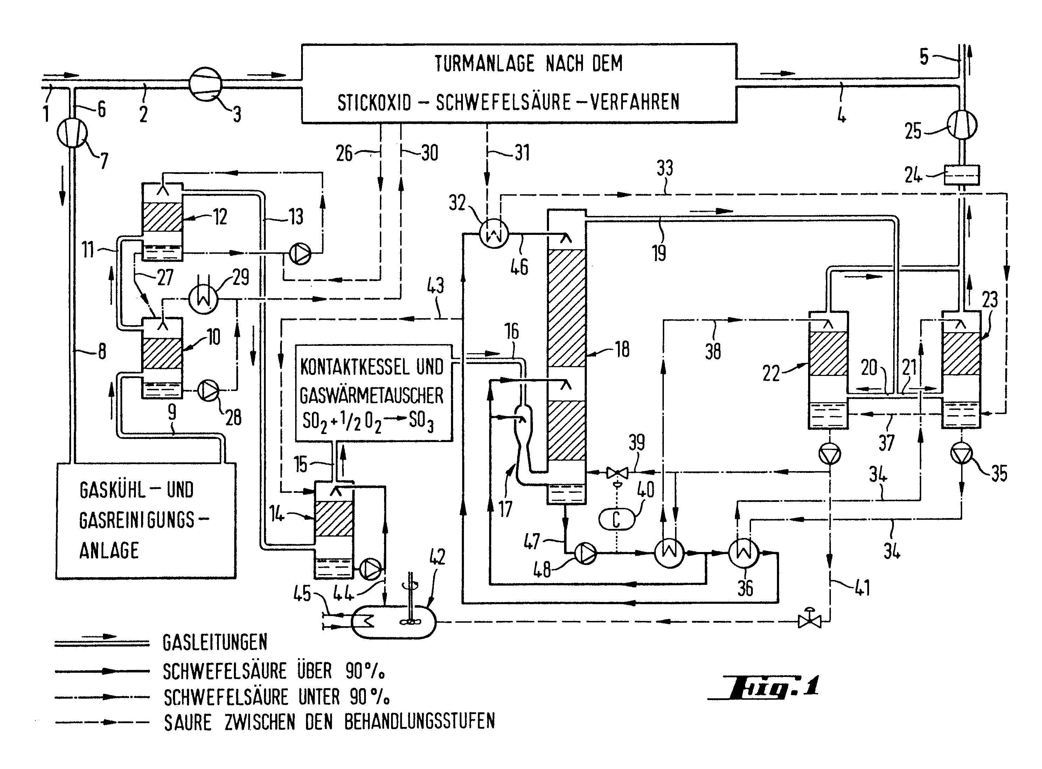

Beispiel 1: Fig. 1 dient zur Erläuterung des ersten Ausführungsbeispieles. Die Gasförderleitungen sind als parallele Linien gezeichnet. Kreisläufe von Schwefelsäure mit mehr als 90 % sind mit
kräftigen Linien dargestellt. Strich-punktierte Linien markieren
Kreisläufe für Säure unter 90 %. Leitungen für den  Transport von
Säure zwischen den Behandlungsstufen sind strichliert dargestellt.
Punktierte Linien sind keine Säureleitungen, sondern markieren
Regelungsvorgänge.

36 $Nm^3$/Sek. eines entstaubten Röstgases mit 4,5 Vol.% $SO_2$ gelangen
bei 80°C über Leitung 1 in das Gasbehandlungssystem. Die Gasmenge
von 36 $Nm^3$/Sek. wird in zwei Ströme geteilt, 25 $Nm^3$/Sek. gelangen
über Leitung 2 und Gebläse 3 in eine Turmanlage nach dem Stickoxid-
Schwefelsäureverfahren. In dieser Turmanlage wird der $SO_2$-Gehalt der
Gase in eine 76-%ige Schwefelsäure verarbeitet. Die Abgase mit einem
Gehalt von $SO_2+NO_x$ von weniger als 400 ppm gelangen über Leitung 4
zum Kamin 5.

11 $Nm^3$/Sek. des entstaubten $SO_2$-Gases gelangen über Leitung 6 und
Ventilator 7 in eine Kontaktanlage, welche bereits vor Errichtung
der Stickoxid-Schwefelsäureanlage vorhanden war und im Zuge der
Erhöhung der Röstgasmenge von 11 $Nm^3$/Sek. auf 36 $Nm^3$/Sek. ergänzt
wurde, um eine Säureproduktion mit einer Konzentration über 95 %
$H_2SO_4$ in der vergrösserten Neuanlage sicherzustellen.

Leitung 8 führt in die nasse Gaskühlung und Gasreinigung der
Kontaktanlage. Die Leitung 9 leitet die Gase nach ihrer Reinigung in
den ersten Gasvortrockenturm 10 und die Leitung 11 verbindet diesen
Turm mit einem zweiten Gasvortrockenturm 12. Der Wassergehalt der
Gase in Leitung 13, welche zum Gastrockenturm 14 führt, liegt unter
4 g/$Nm^3$. Die mittels Säure von 98 % wasserfrei gemachten Gase Zur optimalen Ausnutzung der verfügbaren Wärme ist es zweckmässig, ein zwei- oder mehrstufiges System zur Vorkonzentrierung der aus dem $NO_x$-$H_2SO_4$-System anfallenden Säure zu verwenden.

Aus dem Denitrierturm eines Stickoxid-Schwefelsäure-Systems läuft die Säure oft relativ heiss ab. Es ist von Vorteil, diese Säure mit ihrer ursprünglichen hohen Temperatur in die Säure-Vorkonzentrieranlage einzuleiten. Wie im Beispiel 2 noch näher beschrieben wird, ist es sinnvoll, die Temperatur der Säure, welche aus dem $NO_x$-$H_2SO_4$-System anfällt, durch Wärmeaustausch mit Säure aus dem Absorptionssystem noch weiter anzuheben, vorzugsweise auf Temperaturen von über 100°C.

Die optimale Nutzung der im $SO_3$-Absorptionssystem anfallenden Wärme erfordert ein zwei- oder mehrstufiges $SO_3$-Absorptionssystem.

Dabei kann man die Säureablauftemperatur in der ersten Stufe der $SO_3$-Absorption über 150°C anheben. In der zweiten Absorptionsstufe kann vorzugsweise mit einer tieferen Temperatur gearbeitet werden. Jedoch ist es auch in dieser Stufe vorteilhaft, bei Temperaturen über 100°C zu arbeiten. Bei solch hoher Temperatur hat die Absorptionssäure einen zwar kleinen aber doch messbaren Dampfdruck an $H_2SO_4$. Der grösste Teil dieser dampfförmigen Schwefelsäure wird in der nachfolgenden Säurevorkonzentrierung absorbiert. Vorsorglich kann jedoch gasseitig ein Schwefelsäurenebel-Abscheider nachgeschaltet werden.

Gemäss den Beispielen 1 bis 3 werden die trockenen Austrittsgase zur Vorkonzentrierung von Schwefelsäure ausgenutzt. Alternativ besteht jedoch die Möglichkeit, auf diese Massnahme zu verzichten und die Vorkonzentrierung im Vakuum bei einem Absolutdruck unter 200 mbar durchzuführen. Im Falle des Einsatzes einer Vakuum-Säurekonzentrieranlage wird durch einen Wärmeaustauscher die im $SO_3$-Absorptionskreislauf anfallende Wärme an den Kreislauf der Vakuumkonzentrieranlage übertragen. Aus einer Vakuumkonzentrierung fällt das aus der Säure ausgedampfte Wasser nach dem Kondensator in flüssiger Form an und einem Konverter zugeleitet werden, nach der $SO_3$-Absorption einem
Stickoxid-Schwefelsäure-System zugeleitet werden, in welchem das
restliche $SO_2$ zu Schwefelsäure umgewandelt wird.

Die absolut trockenen Gase aus der $SO_3$-Absorption sind in der Lage,
aus Schwefelsäure Wasser auszutreiben und können daher vorteilhaft
zur Vorkonzentrierung der Säure aus dem Stickoxid-Schwefelsäure-
System eingesetzt werden.

Die vorgenannten Massnahmen erlauben es, jene Gasmengen, welche zur
$SO_3$-Erzeugung herangezogen werden, kleiner als die Hälfte zu wählen,
verglichen mit der Menge der Eintrittsgase des Stickoxid-Schwefel-
säure-Systems.

Wenn $SO_2$-Gase aus verschiedenen Quellen verarbeitet werden müssen,
ist es vorteilhaft, jene Gase, welche mehr $SO_2$ aufweisen, zur
Erzeugung von $SO_3$ einzusetzen, während die grössere Menge an Gas
geringerer Konzentration dem Stickoxid-Schwefelsäure-System direkt
zugeleitet wird.

Wie im Beispiel 3 noch erläutert wird, gelingt es z.B., die gesamte
Säureproduktion aus einem grossen Abgasstrom von 34 $Nm^3$/Sek. in Form
einer 97-%igen Schwefelsäure zu gewinnen, obwohl die $SO_2$-Konzentra-
tion nur bei 2,5 Vol.% liegt. Die dafür notwendige zusätzliche
kleine Kontaktanlage verarbeitet nur eine Gasmenge von 6 $Nm^3$/Sek.
bei einem $SO_2$-Gehalt von 7 Vol.% und braucht nur für einen
$SO_2 \longrightarrow SO_3$-Umsatz von ca. 85 % ausgelegt zu werden.

Sofern ein $SO_2$-Gas zur Verfügung steht, welches etwa doppelt so
konzentriert ist als die Hauptmenge des $SO_2$-Gasstromes, genügt es,
einen Volumenstrom zur $SO_3$-Erzeugung einzusetzen, der weniger als
ein Drittel ausmacht als der Volumenstrom des Eintrittsgases in das
$NO_x$-$H_2SO_4$-System.

tung 34 zugeführt. Die Säureförderung besorgt Pumpe 35. Der Wärmetauscher 36 überträgt die aus dem Kreislauf des SO$_3$-Absorptions-
turmes 18 stammende Wärme an den Kreislauf 34 des Konzentrationsturmes 23.

Aus dem Konzentrierturm 23 gelangt über Leitung 37 die ca. 81,5-%ige
Säure zu einem zweiten Konzentrierturm 22. Die Temperatur der Säure,
welche über Leitung 38 in den Konzentrierturm 22 gelangt, liegt bei
150°C. Durch Abgabe von Wasser an das trockene Eintrittsgas steigt
die Konzentration der Säure auf ca. 85 %. Leitung 39 fördert diese
85-%ige Säure in geregelter Menge in den SO$_3$-Absorptionsturm 18. Das
Konzentrationsmessgerät 40 steuert die Säurezugabe derart, dass im
SO$_3$-Absorber 18 eine Säurekonzentration von 98,4 bis 99 % aufrechterhalten wird.

Ueber Leitung 41 wird eine weitere Menge von 85-%iger Säure in
geregeltem Umfang in den Säuremischbehälter 42 geleitet.

Die Säurekreislaufmenge über dem SO$_3$-Absorber 18 ist so bemessen,
dass die Säure mit ca. 85°C über Leitung 46 eintritt und mit 165°C
durch Leitung 47 zu Pumpe 48 fliesst.

Entsprechend dem Zusatz von 85-%iger Säure via Leitung 39 und der
Aufnahme von SO$_3$ aus dem Gas vermehrt sich die Säuremenge im
SO$_3$-Absorberkreislauf in den Kreislauf des Trockenturmes 14. Die dem
Trockenturm zugeführte ca. 140°C heisse Säure und die Kondensationswärme des im Trockenturm 14 abgeschiedenen Wassers ergeben eine
Anwärmung der den Trockenturm 14 durchströmenden Gase auf eine
Temperatur von über 70°C. Die Konzentration der Kreislaufsäure des
Trockenturrmes 14 liegt bei 98 %.

Eine der über Leitung 43 zugesetzten Säuremenge entsprechende
Säuremenge wird über Leitung 44 in den Säuremischbehälter 42
geleitet. Der Säuremischbehälter 42 ist mit der Kühlvorrichtung 45 ausgerüstet. Die gesamte Säureproduktion des Systems kann aus dem Säuremischbehälter 42 abgezogen werden. Die Konzentration liegt über 95 %.

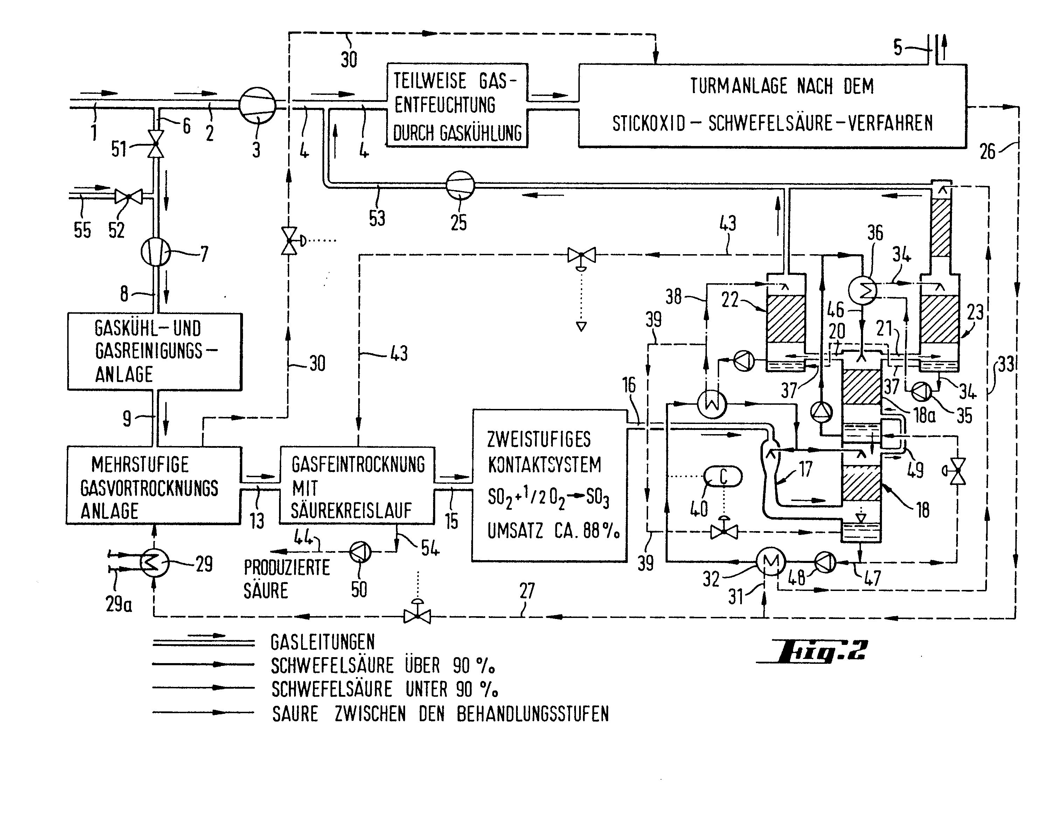

Beispiel 2: Das Prinzip-Fliessbild ist in Fig. 2 dargestellt. Die Art der Darstellung für Gasleitungen, Säurekreisläufe und Leitungen zwischen Behandlungsstufen wurde bereits in Beispiel 1 erläutert.

Gasweg: 40 $Nm^3$/Sek. eines trockenentstaubten Abgases aus einem Hüttenbetrieb gelangen über Leitung 1 in das $SO_2$-Verarbeitungssystem. Die Gastemperatur beträgt 70°C, der $SO_2$-Gehalt 3,4 Vol.%, der Sauerstoffgehalt über 10 Vol.%. Wie dargestellt, wird der Gasstrom in zwei Ströme aufgeteilt. 25 $Nm^3$/Sek. gelangen über Leitung 2, Gebläse 3 und Leitung 4 direkt in eine Gaskühlanlage, wo sie auf eine Temperatur von ca. 40°C abgekühlt werden.

Der kleinere Gasteilstrom, nämlich 15 $Nm^3$/Sek. des $SO_2$-Abgases aus Leitung 1 strömt über Leitung 6 durch das geöffnete Absperrorgan 11 zum Gebläse 7 und danach über Leitung 8 in Richtung einer Kontaktanlage, in welcher ein $SO_2 \longrightarrow SO_3$-Umsatz von ca. 88 % herbeigeführt wird. Die Beschreibung des Gasweges durch die Kontaktanlage folgt später. Zunächst wird darauf verwiesen, dass die noch ca. 1 Vol.% $SO_2$ enthaltenden Austrittsgase der Kontaktanlage letztlich über Gebläse 25 und Leitung 10 wieder mit dem Hauptstrom der Gase in Leitung 4 vereinigt werden.

Nach Kühlung gelangt der Gasstrom in ein Stickoxid-Schwefelsäure-Turmsystem und von dort letztlich über Leitung 5 in die Atmosphäre. Die Summe der Schadgase $SO_2 + NO_x$ im gereinigten Gas liegt unter 300 ppm. Das Stickoxid-Schwefelsäure-Turmsystem enthält einen speziellen Stickoxid-Schwefelsäurenebelabscheider.

Der bereits erwähnte Gasteilstrom von 15 $Nm^3$/Sek. wird, wie schematisch in Fig. 2 dargestellt, nach einer Kühlung und Nassreinigung in eine mehrstufige Gasvortrocknungsanlage geleitet. Der Aufbau dieser Vortrocknung entspricht dem in Beispiel 1 erläuterten Prinzip und auf eine Wiederholung einer Erläuterung kann daher verzichtet
werden. Zweck dieser Vortrocknung ist die Abscheidung der Hauptmenge
der Gasfeuchtigkeit und die Weitergabe des abgeschiedenen Wassers an
das $NO_x$-$H_2SO_4$-System mittels Leitung 30. Ueber Leitung 13 gelangt
der vorgetrocknete Teilgasstrom von 15 $Nm^3$/Sek. in die Gasfeintrocknung, deren Aufbau ebenfalls analog ist, wie in Beispiel 1
dargelegt und erläutert. Ueber Leitung 15 gelangen die ca. 85°C
heissen, trockenen Gase in ein Kontaktsystem, in welchem ca. 88 %
des $SO_2$ ind $SO_3$ umgesetzt werden. Dieser relativ geringe Umsatz
erlaubt die Verwendung eines nur zweistufigen Konverters mit
niedrigem Gaswiderstand. Die den Gaswärmetauscher des Kontaktsystems verlassenden Gase gelangen mit ca. 140°C in den Venturi
Absorber 17 und die erste Füllkörperschicht 18 der $SO_3$-Absorp-
tionsanlage. Die Absorptionstemperatur der Hauptmenge des $SO_3$ durch
eine ca. 98,5-%ige Schwefelsäure liegt bei 160°C. Die Restmenge des
$SO_3$ wird in einer nachgeschalteten Absorptionsstufe 19 abgeschieden,
in welche das Gas über Leitung 41 gelangt. Diese zweite Stufe der
$SO_3$-Absorption wird über Leitung 46 mit einer ca. 115°C heissen
Säure von 98,5 bis 99 % berieselt. Bei dieser Temperatur liegt der
$H_2SO_4$-Dampfdruck im Bereich 0,05 bis 0,1 Torr. Eine diesem Dampfdruck entsprechende kleine Menge $H_2SO_4$-Dampf gelangt in die Konzentriertürme 22 und 23. Dank der hohen Temperatur in den Konzentriertürmen, entsteht - wenn überhaupt - ein grober, leicht abscheidbarer
Schwefelsäurenebel, welcher ohne grösseren Aufwand im nachgeschalteten Stickoxid-Schwefelsäuresystem abgeschieden wird.

Säureweg: Die im Stickoxid-Schwefelsäuresystem anfallende
ca. 77-%ige Säure strömt durch Leitung 26 zur Kontaktanlage und
teilt sich in dieser auf die Leitungen 27 und 31. Etwa 30 % der aus
Leitung 26 anfallenden Säure gelangen über Leitung 237 und Kühler 28
in die Gasvortrocknung. Der Kühlwasserfluss des Kühlers 28 ist mit
Ziffer 29 gekennzeichnet. Wie bereits erläutert, gelangt der
Säurefluss aus Leitung 27 nach Aufnahme von Wasser in der Gasvortrocknung über Leitung 30 zurück in das Stickoxid-Schwefelsäure-
system.

Jene Säure, welche über Leitung 31 dem Säurekonzentriersystem
zugeleitet wird, entspricht stöchiometrisch der gesamten im
$NO_x$-$H_2SO_4$-System aus dem Gas abgeschiedenen $SO_2$-Menge.

Im Wärmetauscher 32 wird die 77-%ige Säure auf 150°C erhitzt. Die
hierfür erforderliche Wärme stammt aus der $SO_3$-Absorption 18. Die
Temperatur der mittels Leitung 47 und Pumpe 48 zum Wärmetauscher 32
fliessenden Säure beträgt ca. 165°C. Die im Wärmetauscher 32
erhitzte 77-%ige Säure gelangt über Leitung 33 in die obere Füllkörperschicht des Konzentrierturmes 23. Die heisse Säure gibt
Wasserdampf ab und erhöht dadurch ihre Konzentration auf ca. 79 %,
bevor sich die Säure mit dem Säurekreislauf der unteren Füllkörperschicht des Konzentrierturmes 23 vermischt. Die Füllkörperschichten
wurden in Fig. 1 und in Fig. 2 durch gekreuzte Schraffierungen
kenntlich gemacht.

Der weitere Weg der Säure aus dem Konzentrierturm 23 zum Konzentrierturm 22 und die Funktion dieses zweistufigen Säurekonzentrier-Systems wurde bereits in Beispiel 1 erläutert und kann aus
Fig. 2 entnommen werden. Die Gesamtmenge der auf ca. 86 % vorkonzentrierten Säure gelangt über Leitung 39 in den Säurekreislauf
des $SO_3$-Absorptionssystems. die Zuflussmenge wird mittels dem
Säurekonzentrations-Mess- und Regelgerät 40 so gesteuert, dass im
Absorptionssystem die gewünschte Konzentration von 98,5 bis 99 %
aufrechterhalten wird.

Wegen des Zuflusses von 86-%iger Säure und durch die Absorption von
$SO_3$ erhöht sich kontinuierlich die umgepumpte Menge an Absorptionssäure. Ueber Leitung 43 wird - gesteuert nach dem Säureniveau im
Sumpf des Absorbers 18 - kontinuierlich Säure in den Gasfeintrockenturm geleitet. Durch Aufnahme von Wasser aus dem Gas stellt sich im
Trockenturmkreislauf eine Konzentration von 97 bis 98 % $H_2SO_4$ ein.

Die produzierte Säure wird mit dieser Konzentration mittels
Leitungen 42 und 44 und Pumpe 14 aus dem System entnommen.

<u>Beispiel 3:</u> Das Beispiel 3 wird ebenso wie Beispiel 2 anhand von Fig. 2 erläutert. Im Beispiel 3 ist jedoch das Absperrorgan 11 geschlossen und das Absperrorgan 12 geöffnet. Durch Leitung 1 strömen 34 $Nmn^3$/Sek. eines $SO_2$-Gases mit 2,5 Vol.%, welche aus einem Abgaserfassungssystem einer Sinter-Röstanlage stammen. Im selben Hüttenbetrieb fallen nach einem Röstofen 6 $Nm^3$/Sek. eines Abgases an, dessen Gehalt an Sauerstoff bei 9 Vol.% liegt. Die Wege der Gase durch die beiden Schwefelsäure-Produktionssysteme und auch der Fluss der Säureströme entsprechen Fig. 2 und wurden bereits im Beispiel 2 erläutert. Gemäss Beispiel 3 genügt es, das kleine Kontaktsystem für einen $SO_2 \longrightarrow SO_3$-Umsatz von nur 85 % auszulegen und die Anlage kann daher mit entsprechend niedrigem Investitions- und Betriebsaufwand errichtet und betrieben werden. Die Konzentration der gesamten anfallenden Schwefelsäure liegt über 97 %. Der $SO_2$-Gehalt der gereinigten Gase beträgt weniger als 100 ppm.

Patentansprüche

1. Verfahren zur Abscheidung von Schwefeldioxid aus Gasen, insbesondere Abgasen, und zur Herstellung von konzentrierter Schwefelsäure mit einer Konzentration von mehr als 90 % durch Einführen einer nach einem Stickoxid-Schwefelsäure-Prozess erhaltenen vorkonzentrierten Schwefelsäure in eine Schwefeltrioxid-Absorptionsanlage, dadurch gekennzeichnet, dass die im Schwefeltrioxid-Absorptionssystem frei werdende Wärmemenge zur Vorkonzentrierung der Schwefelsäure aus dem Stickoxid-Schwefelsäure-Prozess benutzt wird, wobei man

a) den Schwefeldioxid enthaltenden Gasstrom, der zur Erzeugung von Schwefeltrioxid eingesetzt wird, vortrocknet und das aus dem Gas entfernte Wasser als wasserhaltige Schwefelsäure dem Stickoxid-Schwefelsäure-Prozess zuführt und/oder

b) bei der Vorkonzentrierung entstehende wasserhaltige Gase in den Stickoxid-Schwefelsäure-Prozess einführt.

2. Verfahren nach Anspruch 1, dadurch gekennzeichnet, dass im Schwefeltrioxid-Absorptionssystem mit einer Säureablauftemperatur von mehr als 120°C gearbeitet wird.

3. Verfahren nach Anspruch 1, dadurch gekennzeichnet, dass man den Schwefeldioxid enthaltenden Gasstrom, der zur Erzeugung von Schwefeltrioxid eingesetzt wird, in einem Trockenturm auf Temperaturen über 70°C erwärmt.

4. Verfahren nach Anspruch 3, dadurch gekennzeichnet, dass der Trockenturm mit Schwefelsäure von einer Konzentration über 97 % betrieben wird.

0191725

5. Verfahren nach Anspruch 1, dadurch gekennzeichnet, dass der Umsatz von Schwefeldioxid zu Schwefeltrioxid in dem einem Konverter zugeleiteten Gasstrom unter 97 % liegt und die nach der Schwefeltrioxid-Absorption noch Schwefeldioxid enthaltenden Gase dem Stickoxid-Schwefelsäure-Prozess zugeführt werden.

6. Verfahren nach Anspruch 1, dadurch gekennzeichnet, dass man die trockenen Gase aus der Schwefeltrioxid-Absorption in eine Anlage zur Vorkonzentrierung der Säure aus dem Stickoxid-Schwefelsäure-Prozess einleitet.

7. Verfahren nach Anspruch 1, dadurch gekennzeichnet, dass die zur Schwefeltrioxid-Erzeugung geleitete Gasmenge weniger als die Hälfte der in das Stickoxid-Schwefelsäure-System eintretenden Gasmenge beträgt.

8. Verfahren nach Anspruch 1, dadurch gekennzeichnet, dass man zur Erzeugung von Schwefeltrioxid ein Schwefeldioxid enthaltendes Gas einsetzt, dessen Konzentration an Schwefeldioxid höher ist als diejenige des direkt in das Stickoxid-Schwefelsäure-System eingeleiteten Gasstroms.

9. Verfahren nach Anspruch 8, dadurch gekennzeichnet, dass die zur Schwefeltrioxid-Erzeugung geleitete Gasmenge weniger als ein Drittel der in das Stickoxid-Schwefelsäure-System eintretenden Gasmenge beträgt.

10. Verfahren nach Anspruch 1, dadurch gekennzeichnet, dass die aus dem Stickoxid-Schwefelsäure-System stammende Schwefelsäure zwei-oder mehrstufig vorkonzentriert wird.

11. Verfahren nach Anspruch 1, dadurch gekennzeichnet, dass die aus dem Stickoxid-Schwefelsäure-System stammende Schwefelsäure bei Temperaturen über 100°C in eine Säurekonzentrieranlage geleitet wird, die von den Austrittsgasen eines Kontaktkessels durchströmt wird.

C191725

12. Verfahren nach Anspruch 1, dadurch gekennzeichnet, dass die Schwefeltrioxid-Absorption zwei- oder mehrstufig erfolgt.

13. Verfahren nach Anspruch 12, dadurch gekennzeichnet, dass die Säureablauftemperatur aus der ersten Stufe der Schwefeltrioxid-Absorption bei über 150°C liegt.

14. Verfahren nach einem der vorangehenden Ansprüche, dadurch gekennzeichnet, dass die Vorkonzentrierung bei einem absoluten Druck von unter 200 mbar erfolgt.

FO 7.1/SI/sch*

Fig. 1

GASLEITUNGEN

SCHWEFELSÄURE ÜBER 90%

SCHWEFELSÄURE UNTER 90%

SAURE ZWISCHEN DEN BEHANDLUNGSSTUFEN

TEILWEISE GAS-ENTFEUCHTUNG DURCH GASKÜHLUNG

TURMANLAGE NACH DEM STICKOXID – SCHWEFELSÄURE – VERFAHREN

GASKÜHL- UND GASREINIGUNGS-ANLAGE

MEHRSTUFIGE GASVORTROCKNUNGS ANLAGE

GASFEINTROCKNUNG MIT SÄUREKREISLAUF

ZWEISTUFIGES KONTAKTSYSTEM
$SO_2 + \frac{1}{2} O_2 \rightarrow SO_3$
UMSATZ CA. 88%

PRODUZIERTE SÄURE

GASLEITUNGEN

SCHWEFELSÄURE ÜBER 90%

SCHWEFELSÄURE UNTER 90%

SAURE ZWISCHEN DEN BEHANDLUNGSSTUFEN

*Fig.2*

C191725